(19) Europäisches Patentamt / European Patent Office / Office européen des brevets

(11) **EP 1 840 383 A1**

(12) **EUROPEAN PATENT APPLICATION**

(43) Date of publication:
**03.10.2007 Bulletin 2007/40**

(51) Int Cl.:
*F04D 19/04* (2006.01)    *B01D 53/00* (2006.01)

(21) Application number: **07251419.3**

(22) Date of filing: **30.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **31.03.2006 US 395409**

(71) Applicant: **AIR PRODUCTS AND CHEMICALS, INC.**
**Allentown, PA 18195-1501 (US)**

(72) Inventor: **McDermott, Wayne Thomas**
**Fogelsville, PA 18051 (US)**

(74) Representative: **Muir, Benjamin M. J.**
**Beck Greener**
**Fulwood House**
**12 Fuldwood Place**
**London WC1V 6HR (GB)**

(54) **Turbomolecular pump system for gas separation**

(57)    Gas mixtures are separated in a device (401) comprising a housing (403), a turbomolecular pump assembly (407) therein having inlet and outlet ends, a first chamber (409) adjacent the inlet end and having an inlet port (413) and a first outlet port (415), and a second chamber (411) adjacent the outlet end and having a second outlet port (417). Several devices (801, 803, 805, 807, 809 - see Fig 8) can be connected in series to provide a plurality of separation stages, each having a respective reference number n from 1 to N, inclusive The inlet port of a separation stage n is connected (821, 861) with the first outlet port of an adjacent stage n + 1, and the second outlet port of the stage n is connected (853, 857) with the inlet port of the stage n + 1. The inlet port of any stage may serve as a feed port. The first chamber of stage n = 1 and the second chamber of stage n = N have first and second product outlets (847 & 818), respectively.

FIG. 8

EP 1 840 383 A1

**Description**

BACKGROUND OF THE INVENTION

Processes for the separation of gas mixtures utilize differences in physical and chemical properties of the components to effect separation between the components. A wide range of gas mixtures can be separated by processes developed in the gas separation art including, for example, distillation, chemical distillation, adsorption, absorption, diffusion through membranes, thermal diffusion, centrifugation, electromagnetic separation, nozzle separation, cyclones, molecular drag-type pumps, chemical exchange reactions, ion exchange processes, photochemical separation, electrolysis, electromigration, and vacuum arc separation.

In many gas separation processes, the differences in the selected component properties are sufficient to allow the design of separation systems having reasonable equipment size and capital cost. In some separations, however, the physical and chemical properties of the components are so close that the desired separation is difficult, which results in large, complex, and costly separation equipment. For example, the separation of isotopes of an element or compound is difficult because the differences in the physical and chemical properties of the isotopes are very small.

One class of gas separation processes is based on differences in the molecular weight of the components to be separated. In this class of processes, flow velocity gradients and changes in flow direction are imparted to the gas mixture, and this causes differences in the momentum and velocity of individual gas molecules. These differences then are used to effect separation. Such momentum-based processes include, for example, gas centrifuging, nozzle separation, and cyclone separation.

There is a need in the gas separation field for improved momentum-based gas separation processes that can be used to separate mixtures of components having very small differences in physical properties, particularly isotopes of elements and compounds. This need is addressed by the embodiments of the invention described below and defined by the claims that follow.

BRIEF SUMMARY OF THE INVENTION

One embodiment of the invention relates to a system for the separation of a gas mixture comprising:

(a) a plurality of separation stages, each stage designated by a reference number n, where n is an integer having a value from 1 to N, inclusive, and N is the total number of stages, wherein each stage comprises a housing; a turbomolecular pump assembly disposed within the housing and having an inlet end and an outlet end; a first chamber within the housing adjacent the inlet end of the turbomolecular pump and having and inlet port and a first outlet port; and a second chamber within the housing adjacent the outlet end of the turbomolecular pump assembly and having a second outlet port;

(b) a passage connecting the inlet port of a separation stage n with the first outlet port of an adjacent separation stage n + 1;

(c) a passage connecting the second outlet port of the separation stage n with the inlet port of the separation stage n + 1;

(d) a feed passage in flow communication with the inlet port of any separation stage having a reference number n and defined as a feed stage, where the reference number n for the feed stage is an integer having a value from 1 to N, inclusive;

(e) a first product withdrawal passage in flow communication with the first chamber of a separation stage having a reference number n = 1; and

(f) a second product withdrawal passage in flow communication with the second chamber of a separation stage having a reference number n = N.

The system may further comprise a passage connecting the inlet port of the separation stage n with the second outlet port of an adjacent separation stage n - 1 and a passage connecting the first outlet port of the separation stage n with the inlet port of the adjacent separation stage n - 1.

In one mode of this embodiment, the feed stage has the reference number n = 2 and in another mode the feed stage has the reference number n = N. Alternatively, the reference number n of the feed stage may be greater than 2 and less than N.

The system may comprise a booster pump installed in the passage connecting the inlet port of the separation stage n with the first outlet port of the adjacent separation stage n + 1, wherein the booster pump is adapted to transfer gas from the adjacent separation stage n + 1 to stage n. A flow control device may be installed in the passage between the booster pump and the inlet port of the separation stage n. The feed passage may be in flow communication with the passage between the inlet port of the feed stage and the outlet of the flow control device. The flow control device may be a throttling valve or a flow restricting orifice.

The system may include a product withdrawal pump installed in the first product withdrawal passage and adapted to withdraw product gas from the chamber of the separation stage n = 1. The system may include a product withdrawal pump installed in the second product withdrawal passage and adapted to withdraw product gas from the second chamber of the separation stage n = N.

The system may comprise a flow control device installed in the passage connecting the inlet port of the separation stage n with the first outlet port of the adjacent separation stage n + 1; this flow control device may be a throttling valve or a flow restricting orifice.

The system may comprise a flow control device installed in the passage connecting the second outlet port of the separation stage n with the inlet port of the separation stage n + 1; this flow control device may be a throttling valve or a flow restricting orifice.

Another embodiment of the invention includes a device for the separation of a gas mixture comprising a cylindrical housing having an axis; a turbomolecular pump assembly disposed within the housing and having an inlet end and an outlet end; a first chamber within the housing adjacent the inlet end of the turbomolecular pump assembly, the chamber having a feed gas inlet adapted to deliver feed gas to the inlet end of the turbomolecular pump assembly at or adjacent the axis thereof and a first outlet port spaced apart from the feed gas inlet and adapted for the withdrawal of a first gas product; and a second chamber within the housing adjacent the outlet end of the turbomolecular pump assembly and having a second outlet port adapted for the withdrawal of a second gas product therefrom.

The device may include a gas distribution baffle disposed in the first chamber and lying in a plane orthogonal to the axis of the turbomolecular pump assembly, wherein one side of the baffle is adjacent a rotor of the turbomolecular pump assembly at the inlet end thereof. The feed gas inlet may include a feed gas inlet tube passing through the gas distribution baffle at or adjacent the axis of the turbomolecular pump assembly. The device may include a plurality of flow guide fins attached to the gas distribution baffle on the side facing the turbomolecular pump assembly, wherein the flow guide fins extend radially outward from the intersection of the feed gas tube with the gas distribution baffle.

An alternative embodiment relates to a method for the separation of a gas mixture comprising:

(a) providing a feed gas mixture containing at least a first component and a second component, wherein the second component has a higher molecular weight than the first component;

(b) providing a gas separation system comprising

(b1) a plurality of separation stages, each stage designated by a reference number n, where n is an integer having a value from 1 to N, inclusive, and N is the total number of stages, wherein each stage comprises

a housing,

a turbomolecular pump assembly disposed within the housing and having an inlet end and an outlet end,

a first chamber within the housing adjacent the inlet end of the turbomolecular pump assembly and having and inlet port and a first outlet port, and

a second chamber within the housing adjacent the outlet end of the turbomolecular pump assembly and having a second outlet port;

(b2) a passage connecting the inlet port of a separation stage n with the first outlet port of an adjacent separation stage n + 1;

(b3) a passage connecting the second outlet port of the separation stage n with the inlet port of the separation stage n + 1;

(b4) a feed passage in flow communication with the inlet port of any separation stage having a reference number n and defined as a feed stage, where the reference number n for the feed stage is an integer having a value from 1 to N, inclusive.

(b5) a first product withdrawal passage in flow communication with the first chamber of a separation stage n = 1; and

(b6) a second product withdrawal passage in flow communication with the second chamber of a separation stage n = N.

(c) introducing the feed gas mixture into the feed passage and separating the gas in the plurality of separation stages;

(d) withdrawing via the first product withdrawal passage a first product gas enriched in the first component; and

(e) withdrawing via the second product withdrawal passage a second product gas enriched in the second component.

The feed gas mixture may comprise $^{28}SiH_4$, $^{29}SiH_4$, and $^{30}SiH_4$ or may comprise $SiF_4$, $^{29}SiF_4$, and $^{30}SiF_4$. Alternatively, the feed gas may comprise two or more components selected from the group consisting of oxygen, nitrogen, argon, krypton, and xenon. Another alternative feed gas comprises two or more components selected from the group consisting of hydrogen, deuterium and tritium. Yet another feed gas may comprise two or more components selected from the group consisting of helium, hydrogen, deuterium and tritium.

The gas pressure in the first chamber of any separation stage may be between $10^{-5}$ torr ($1.3 \times 10^{-3}$ Pa) and $10^{-10}$ torr ($1.3 \times 10^{-8}$ Pa). The gas pressure in the second chamber of any separation stage may be between $10^{-2}$ torr (1.3 Pa) and 10 torr ($1.3 \times 10^3$ Pa).

The gas pressure in the first chamber of a separation stage having the reference number n may be less than the gas pressure in the first chamber of an adjacent separation stage having the reference number n + 1. The gas pressure in the first chamber of a separation stage having reference number n may be less than the gas pressure in the first chamber of a separation stage having reference number n + 1 by the factor 2 to 10.

BRIEF DESCRIPTION OF SEVERAL VIEWS OF THE DRAWINGS

Fig. 1 is a plot of zero flow compression ratio vs. foreline pressure for a commercially-available turbomolecular pump.

Fig. 2 is a plot of zero flow compression ratio vs. foreline pressure for another commercially-available turbomolecular pump.

Fig. 3 is a log-log plot of zero flow compression ratio vs. gas molecular weight from the data of Table 1.

Fig. 4 is a schematic drawing of a separation device according to an embodiment of the present invention.

Fig. 5 is a schematic drawing of a separation device according to another embodiment of the present invention.

Fig. 6 is a feed distribution baffle for use in the device of Fig. 5.

Fig. 7 is an alternative feed distribution baffle for use in the device of Fig. 5.

Fig. 8 is a schematic flow diagram of a multiple-stage separation system utilizing the separation device of Fig. 4 or Fig. 5.

Fig. 9 is an illustration of a segment of Fig. 8 showing gas pressures of Example 3.

DETAILED DESCRIPTION OF THE INVENTION

The embodiments of the present invention provide cost-effective methods for the separation of various types of gas mixtures based on differences in component molecular weight. Embodiments of the invention can be applied to gaseous isotope enrichment, for example, in the separation of a mixture of $^{28}SiH_4$, $^{29}SiH_4$, and $^{30}SiH_4$ to yield a product enriched in the isotope $^{28}SiH_4$ or a mixture of $^{28}SiF_4$, $^{29}SiF_4$, and $^{30}SiF_4$. to yield a product enriched in the isotope $^{28}SiF_4$. In another embodiment, the method can be used to separate a gas mixture comprising two or more components selected from the group consisting of oxygen, nitrogen, argon, krypton, and xenon. In another representative application, trace impurities can be removed from a bulk product such as, for example, the removal of trace hydrocarbons from $N_2$ or the

removal of trace $C_2F_6$ from $CF_4$.

Isotopically enriched silicon precursors such as $^{28}SiH_4$ are useful in the semiconductor industry for producing isotopically enriched silicon layers, thereby providing an increased thermal conductivity to the layers. Such layers have been found to reduce operating temperature of the devices, and thereby form more reliable microelectronic devices. Another example of commercially useful isotope enrichment is separation of deuterium ($D_2$) from hydrogen ($H_2$), tritium ($T_2$), and compounds thereof (e.g., HD) or from mixtures of helium, hydrogen, deuterium and tritium. Deuterium and deuterated compounds such as deuterated silane ($SD_4$) are useful in the semiconductor industry for passivating dangling silicon surface bonds to form Si-D bonds. Such bonds have been found to form more reliable microelectronic devices than conventional Si-H surface bonds.

The enrichment of an isotopic mixture of a gaseous element or compound is difficult due to the nearly identical thermo-physical and chemical properties of the isotopes. The stage separation factors of gas centrifuges or distillation columns used to separate isotopic mixtures typically are low, and a large number of stages are required to effect isotopic enrichment. These processes also have high capital and operating costs, and specialized equipment is required to effect the desired separation. The evaluation of new enriched gaseous isotope products may require less than 1 kg of material in order to determine technical and commercial feasibility. A small emerging market for the new isotope product may not justify the expense required for large scale production. For example, isotopic enrichment of gaseous compounds such as $SiF_4$ using chemically enhanced distillation may require the investment of millions of dollars in columns several hundred feet tall to achieve the desired degree $SiF_4$ iosotope enrichment.

The embodiments of the present invention provide a suitable process for separating gaseous isotope mixtures and other difficult-to-separate gas mixtures using relatively low cost, commercially-available equipment. The process is practical to implement on a small physical and economic scale, which is important when the products are marketed as specialty products in small volumes at high unit cost. The process also permits ready scale-up in equipment capacity when increased production is needed to meet growing market volumes. In order to realize a small initial scale and a low initial capital investment, the process uses a relatively low number of stages to achieve the desired enrichment.

The embodiments of the invention utilize a staged process to separate mass disparate gas mixtures utilizing multiple separation devices having specially-adapted turbomolecular pump assemblies. A turbomolecular pump assembly is defined herein as a type of turbine pump having plurality of rotors that rotate at high speed, wherein each rotor rotates between two fixed stators. In some embodiments described below, an end rotor in a stack of coaxial rotors rotates adjacent a single stator. The rotors typically have tilted turbine-type blades or oblique channels, and the stators are typically blades or oblique channels tilted in the direction opposite to the rotor blades. Rotor and stator blades are tilted at angles intended to maximize the probability of transmitting a given gas molecule from the pump inlet to the pump outlet. The turbomolecular pump assembly is installed in a housing with multiple inlet and outlet ports as described in detail below. A turbomolecular pump is defined as a commercially-available device having a turbomolecular pump assembly in a housing with an inlet and an outlet, wherein the turbomolecular pump is designed and operated as a highly-efficient vacuum pump used to achieve ultra-low pressures as low as $10^{-10}$ torr ($1.3 \times 10^{-8}$ Pa).

A stage or separation stage is defined as a gas separation device having at least one inlet and at least two outlets, wherein a gas mixture having at least two components of differing molecular weights is introduced into the device through an inlet, a lighter gas stream enriched in one of the lower molecular weight components is withdrawn through a first outlet and a heavier gas stream enriched in one of the higher molecular weight components is withdrawn through a second outlet. Separation stages may be utilized in series as described below wherein the heavier gas stream from a first stage is introduced into the inlet of an adjacent second stage and the lighter gas stream from the second stage is introduced into the inlet of the first stage.

The term "in flow communication with" as applied to a first and second region means that gas can flow from the first region to the second region through connecting piping and/or an intermediate region. The term "connected to" as applied to a first and second region means that gas can flow from the first region to the second region through connecting piping.

The indefinite articles "a" and "an" as used herein mean one or more when applied to any feature in embodiments of the present invention described in the specification and claims. The use of "a" and "an" does not limit the meaning to a single feature unless such a limit is specifically stated. The definite article "the" preceding singular or plural nouns or noun phrases denotes a particular specified feature or particular specified features and may have a singular or plural connotation depending upon the context in which it is used. The adjective "any" means one, some, or all indiscriminately of whatever quantity. The term "and/or" placed between a first entity and a second entity means one of (1) the first entity, (2) the second entity, and (3) the first entity and the second entity.

Gas molecules in the turbomolecular pump assembly collide with the spinning rotors and mechanical energy of the rotor is transferred to the gas molecules, thereby giving the molecules momentum in a desired direction. The collisions typically impart greater momentum to heavier molecules than to lighter molecules, and this momentum difference promotes a selective migration of heavier molecules from the inlet to the outlet the turbomolecular pump assembly. Different types of turbomolecular pump assemblies are known in the art and are used in commercially-available turbomolecular pumps marketed by vendors such as Alcatel (Adixen), Pfeiffer, Helix Technology, and Kurt J. Lesker Company.

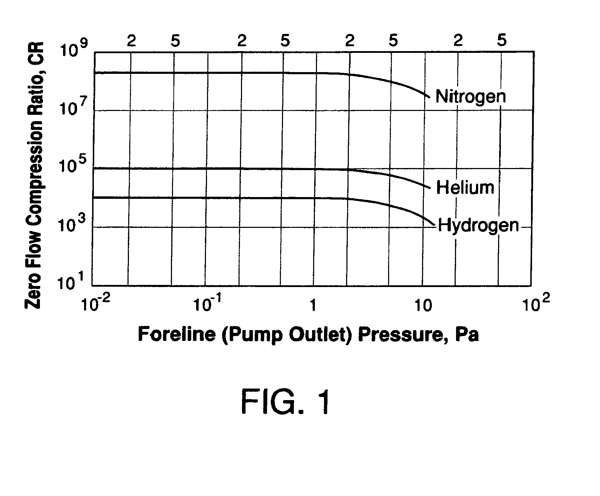

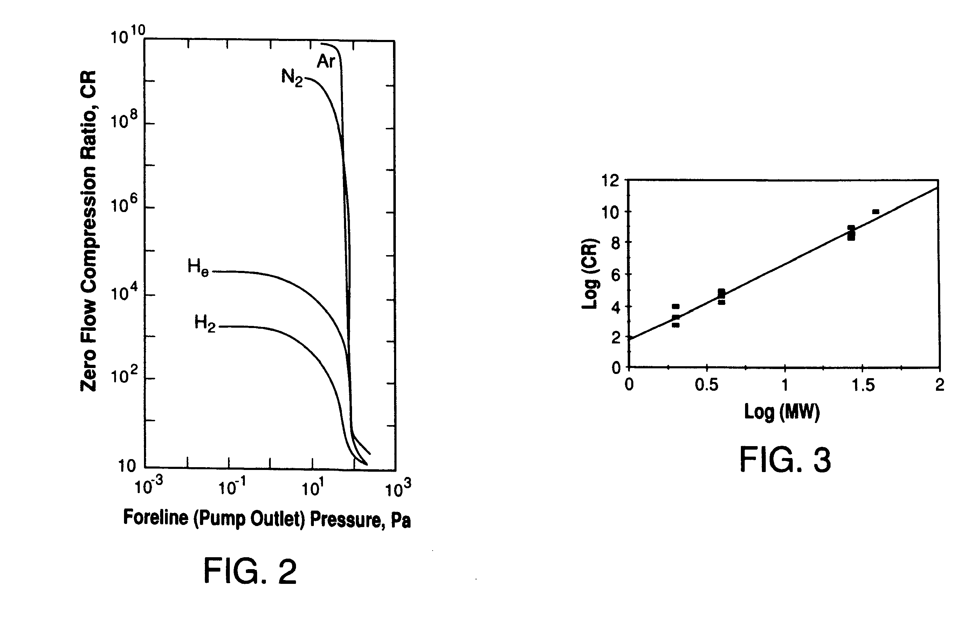

Turbomolecular pumps typically operate in pressure range of $10^{-3}$ (0.13 Pa) to $10^{-12}$ torr (1.3 x $10^{-10}$ Pa) and are utilized as vacuum pumps to generate ultra-low vacuum levels. The outlet of a turbomolecular pump typically is connected to a conventional vacuum pump that is described as a foreline pump. Each type of turbomolecular pump has a characteristic compression ratio, CR, which depends upon the gas being pumped. Typical CR values are given in Figs. 1 and 2 for two commercially-available turbomolecular pumps, and show that CR increases to a maximum value at low operating pressures for each gas. This maximum CR value is a measure of the ability of a pump to compress a gas at zero flow and is defined as the ratio of the outlet pressure to the inlet pressure at zero gas flow. This is equivalent, for example, to closing the inlet (suction) end of a vacuum cleaner hose and determining the ratio of the outlet pressure (1 atmosphere) to the measured pressure at the closed inlet end of the hose.

Hydrogen has the lowest compression ratio of all gases, as illustrated in Figs. 1 and 2, because hydrogen molecules are light and can travel faster than the rotating blades. For a mixture of gases in a container at thermal equilibrium, the root mean square molecular velocity, $V_{rms}$, of any species is given by

$$V_{rms} = (3RT/MW)^{1/2} \qquad \text{(Eqn. 1)}$$

where MW is the molecular weight of the molecule, R is the universal gas constant, and T is the gas absolute temperature. Light gases therefore can diffuse in a turbomolecular pump from the pump foreline (i.e., the pump outlet) to the pump inlet more easily than can heavier, slower molecules. This means that the fraction of a lighter gas that will "backstream" through the turbine rotors without being struck by the blades is higher than that of a heavier gas because of the faster thermal velocity of the lighter gas molecules.

The compression ratio of a turbomolecular pump assembly in a separation device directly determines the partial pressure, p, of any specific gas component in a pumped chamber (i.e., the inlet). Lighter gases therefore have a higher partial pressure in the pumped chamber than heavier gases, and the gas is enriched the lighter species in the pumped chamber (i.e., pump inlet). Heavier components will have a higher partial pressure at the pump outlet that the lighter components, and the gas is enriched in the heavier species at the pump discharge.

It may be assumed that at low pressures (i.e., below $10^{-2}$ torr; 1.3 Pa) the value of CR for a given gas in a gas mixture is approximately independent of the other gas species present and that the gas mixture approximately follows the ideal gas law. An elementary separation factor, $q_o$, of a separation device using a turbomolecular pump assembly for a two-component gas mixture may be defined by

$$q_o \sim CR_1 / CR_2 \qquad \text{(Eqn. 2)}$$

where subscripts 1 and 2 refer to the two species in the mixture.

Values of the maximum CR for various gases and turbomolecular pump designs taken from the literature are listed in Table 1 and are plotted against MW in Fig. 3. A least squares regression fit of the plotted values yields the following empirical relationship:

$$CR \sim 68.7 \, (MW)^{4.83}. \qquad \text{(Eqn. 3).}$$

The r-squared value of the fit is 0.980. The above equations can be used to predict the elementary separation factor for any binary gas mixture using only the molecular weight values for each gas.

Table 1

| Examples of Turbomolecular Pump Maximum Compression Ratios (CR) | | | | |
|---|---|---|---|---|
| Reference or Vendor | $H_2$ MW=2 | He MW=4 | $N_2$ MW=28 | Ar MW=40 |
| A User's Guide to Vacuum Technology, 3rd Edition, by John F. O'Hanlon, John Wiley and Sons, Hoboken, NJ, 2003 (See Fig. 2) | $2 \times 10^3$ | $5 \times 10^4$ | $10^9$ | $10^{10}$ |
| Helix Model Turbo V300HT (See Fig. 1) | $10^4$ | $10^5$ | $2 \times 10^8$ | -- |
| Alcatel (Adixen) Model ATP 900 | $2 \times 10^3$ | $2 \times 10^4$ | $1 \times 10^9$ | -- |
| Lesker Vacuum Systems *(Technical Notes)* | $6.3 \times 10^2$ | -- | $4 \times 10^8$ | -- |

By inserting Eqn. 3 into Eqn. 2, the following empirical formula is obtained for the separation factor for species 1 and 2 in a separation device using a turbomolecular pump assembly:

$$q_o \sim (MW_1/MW_2)^{4.83} \qquad \text{(Eqn. 4).}$$

This may be compared with the separation factor for the well-known gaseous diffusion process given by

$$q_o \sim (MW_1/MW_2)^{1/2} \qquad \text{(Eqn. 5).}$$

It is seen that the separation factor for a separation device using a turbomolecular pump assembly is significantly higher than that of the gaseous diffusion process.

In one embodiment of the invention, separation devices using turbomolecular pump assemblies may arranged in parallel to form stages. Stages may be arranged in series to form a countercurrent cascade as described below. Other parallel and series pump arrangements can be used, depending upon the application parameters. The number stages, S, required to achieve product and feed stream abundances $R_p$ and $R_o$ respectively is given by

$$S+1 \sim \ln(R_p/R_o)/\ln(q_o) \qquad \text{(Eqn. 6)}$$

where R can be expressed in the units of mole fraction, weight fraction, mole %, or weight %.

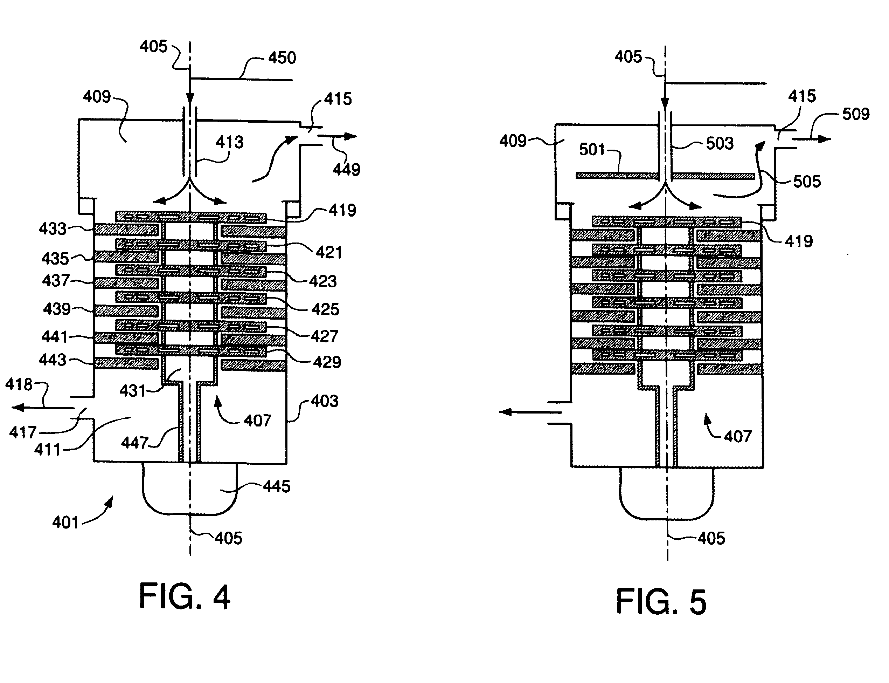

A turbomolecular pump can be modified to operate as a gas mixture separation device according to embodiments of the present invention. One such modification is shown in Fig. 4 to illustrate an example embodiment. Gas mixture separation device 401 comprises a generally cylindrical housing 403 having axis 405, wherein the housing encloses turbomolecular pump assembly 407. Separation device 401 includes first chamber 409 at the upper end of the housing adjacent the inlet end of the turbomolecular pump assembly and second chamber 411 at the lower end of the housing adjacent the outlet end of the turbomolecular pump assembly.

First chamber 409 includes feed gas inlet 413 adapted to deliver a feed gas mixture 450 to the first chamber to contact the inlet end of turbomolecular pump assembly 407 and first outlet port 415 adapted to withdraw a first gas product 449 from the first chamber. Other locations of feed gas inlet 413 and first outlet port 415 in first chamber 409 are possible, and feed gas inlet 413 may be spaced apart from first outlet port 415 in any desired orientation. Second chamber 411 at the lower end of the housing adjacent the outlet end of the turbomolecular pump assembly includes second outlet port 417 adapted to withdraw second gas product stream 418 from second chamber 411. While shown here as installed on the periphery of second chamber 411, second outlet port 417 may be installed on any part of second chamber 411 as desired.

Turbomolecular pump assembly 407 comprises a plurality of rotors illustrated here by exemplary rotors 419, 421, 423, 425, 427, and 429 fixedly mounted on center drive cylinder or shaft 431. The rotors and the center drive cylinder are generally coaxial with axis 405. Any number of rotors may be employed, and the number of rotors may be from 1 to 20 in a typical separation device. The rotors are located between or adjacent a plurality stators attached to the inner wall of the housing as illustrated here by stators 433, 435, 437, 439, 441, and 443. The number of stators is selected based on the number of rotors. In this example, there are equal numbers of rotors and stators, and the top face of rotor 419 is adjacent first chamber 409.

The rotors may use any type of design configuration known in the turbomolecular pump art such as, for example, turbine blades or channeled discs. Likewise, the stators may use any type of design configuration known in the turbomolecular pump art such as, for example, fixed blades, channeled and/or perforated discs, or porous discs. Alternatively, rotors and stators may be designed with specific features for use in the gas separation devices described herein.

A turbomolecular pump assembly as defined above typically includes a rotor-stator assembly, a drive shaft, and a drive motor. A turbomolecular pump assembly may be provided as part of a commercially-available turbomolecular pump, which may be modified for use as a separation device as described herein. Representative suppliers of turbomolecular pumps that may be modified for use as separation devices include, for example, Alcatel (Adixen), Pfeiffer, Helix Technology, and Kurt J. Lesker Company.

The rotor assembly comprising rotors 419 to 429 and center drive cylinder 431 are driven by motor 445 via coaxial shaft 447. Typical rotation speeds range from 24,000 rpm to 80,000 rpm. Turbomolecular pump assembly 407 typically is oriented with a vertical axis as shown, but can be operated in any orientation.

In the operation of gas mixture separation device 401, mixed feed gas stream 450 at a typical pressure between $10^{-5}$ torr ($1.3 \times 10^{-3}$ Pa) and $10^{-10}$ torr ($1.3 \times 10^{-8}$ Pa)is introduced via feed gas inlet 413 into first chamber 409 which contains a well-mixed gas enriched in the lighter component(s). The mixed gas contacts spinning rotor 419 and a portion of the heavier component(s) preferentially migrate through the rotor-stator arrangement in turbomolecular pump assembly 407 as described above. A portion of the gas enriched in the lighter component(s) in first chamber 409 is withdrawn via first outlet port 415 as first product stream 449.

Gas passing through successive rotor-stator elements in turbomolecular pump assembly 407 is successively enriched in the heavier component(s), and the gas mixture passing from the turbomolecular pump assembly into second chamber 411 thus is enriched in the heavier component(s). A second gas product enriched in the heavier component (s) is withdrawn therefrom via second outlet port 417 as stream 418.

Gas mixture separation device 401 of Fig. 4 may be modified as shown in the embodiment shown in Fig. 5. In this modified system, gas distribution baffle 501 is installed within first chamber 409 with feed gas inlet tube 503 passing through the center of the baffle as shown. Gas distribution baffle 501 lies in a plane orthogonal to axis 405 of turbomolecular pump assembly 407, wherein one side of the baffle is adjacent the top surface of rotor 419 at the inlet end of the turbomolecular pump. Baffle 501 operates to enhance the contact of the feed gas from inlet tube 503 with the upper surface of rotor 419, thereby improving the separation in first chamber 409. Portion 505 of the gas in first chamber 409 enriched in the lighter component(s) flows via first outlet port 415 and is withdrawn as first product stream 509.

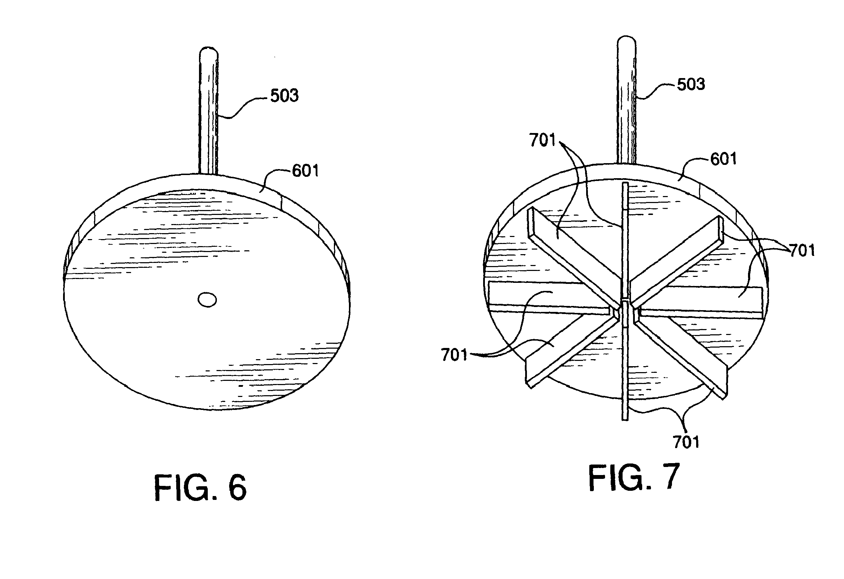

Gas distribution baffle 501 of Fig. 6 may be a simple disk 601 attached to feed gas inlet tube 503. Flow direction devices may be attached to the face of disk 601 to direct gas flow in desired patterns within first chamber 409. One such embodiment is illustrated in Fig. 7 wherein a plurality of flow guide fins 701 are attached to the gas distribution baffle on the side facing the turbomolecular pump assembly, wherein the flow guide fins extend radially outward from the intersection of feed gas tube 503 with gas distribution baffle 601 as shown. This arrangement promotes radial flow of the feed gas mixture over the face of top rotor 419, thereby enhancing gas contact with rotor and increasing separation in first chamber 409.

While the gas mixture separation devices illustrated in Figs. 4 and 5 have a single housing enclosing a single turbomolecular pump assembly, other arrangements are possible depending on design flow rates and pressure ratios. For example, the housing may enclose two turbomolecular pump assemblies operating in parallel, mounted coaxially on a common shaft, and driven by a single motor. In another embodiment, two or more turbomolecular pump assemblies, each having a separate drive system, may be arranged in parallel within a single housing. Alternatively, two or more turbomolecular pump assemblies, each having a separate housing, may be arranged in parallel to form a single separation device. Other parallel and series arrangements for the turbomolecular pump assemblies can be envisioned to satisfy various design requirements.

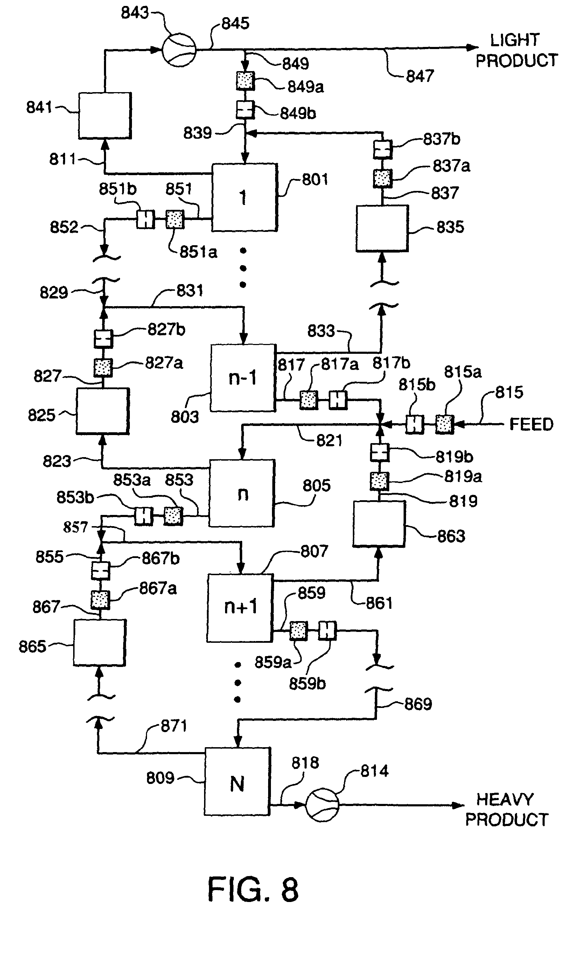

A plurality of gas mixture separation devices described above may be assembled to form a multi-stage system to give enhanced separation efficiency. An exemplary embodiment of a multi-stage separation system is illustrated in Fig. 8, which shows a plurality of separation stages in series, each stage designated by a reference number n, where n is an integer having a value from 1 to N, inclusive, and N is the total number of stages. Each stage may utilize a separation device similar to either of the devices described above with reference to Figs. 4 and 5, wherein each stage comprises a housing, a turbomolecular pump assembly disposed within the housing and having an inlet end and an outlet end, a first chamber within the housing adjacent the inlet end of the turbomolecular pump and having and inlet port and a first outlet port, and a second chamber within the housing adjacent the outlet end of the turbomolecular pump assembly and having a second outlet port. Alternatively, the stages may include other separation device embodiments using turbomolecular pump assemblies as described above.

The multi-stage system includes a passage connecting the inlet port of a separation stage n with the first outlet port of an adjacent separation stage n + 1 and a passage connecting the second outlet port of the separation stage n with the inlet port of the separation stage n + 1. A feed passage is provided in flow communication with the inlet port of any separation stage having a reference number n and defined as a feed stage, where the reference number n for the feed stage is an integer having a value from 1 to N, inclusive. Any stage can be a feed stage and the system may have more than one feed stage. A first product withdrawal passage is provided in flow communication with the first chamber of a separation stage having a reference number n = 1 and a second product withdrawal passage is provided in flow communication with the second chamber of a separation stage having a reference number n = N.

In certain embodiments, the system also includes a passage connecting the inlet port of the separation stage n with the second outlet port of an adjacent separation stage n - 1 and a passage connecting the first outlet port of the separation stage n with the inlet port of the adjacent separation stage n - 1.

Referring now to the embodiment illustrated in Fig. 8, five separation devices 801, 803, 805, 807, and 809 are designated as generic stages 1, n - 1, n, n + 1, and N, respectively. In this system, generic stage 1 is the first stage from which the first product enriched in the lighter component(s) is withdrawn via line 811 by turbomolecular booster pump 841 and foreline pump 843, and generic stage N is the last stage from which the second product enriched in the heavier component(s) is withdrawn via line 818 and foreline pump 814. The number of stages, N, may range from 1 to 1000. In this embodiment, the feed gas mixture is introduced at about atmospheric pressure into the system via line 815, filter 815a, and flow restricting orifice 815b. The feed is combined with an interstage heavy gas fraction withdrawn from generic stage n - 1 via line 817, filter 817a, and flow restricting orifice 817b and with an interstage light gas fraction withdrawn from generic stage n + 1 via line 819, filter 819a, and flow restricting orifice 819b. Flow restricting orifices 815b, 817b, and 819b serve to reduce the pressure and control the flow of the gas from lines 815, 817, and 819, respectively. Filters 815a, 817a, and 819a are optional and protect flow restricting orifices 815b, 817b, and 819b from possible plugging by stray particulate material in the system. Similar filters are described below, which also are optional and provide the same function of protecting the downstream flow restriction orifices.

The combined gas in line 821 flows into the first chamber of separation device 805, i.e., generic stage n, which in this embodiment is defined as the feed stage. The pressure in the first chamber of separation device 805 may be in the range of $10^{-5}$ torr ($1.3 \times 10^{-3}$ Pa) to $10^{-10}$ torr ($1.3 \times 10^{-8}$ Pa). Separation between lighter components and heavier components is effected in separation device 805 as described above. A first gas product (i.e., an interstage light gas fraction) enriched in lighter components is withdrawn via line 823 by booster pump 825, flows via line 827, optional filter 827a, and flow restricting orifice 827b, and is combined with a second gas product (i.e., an interstage heavy gas fraction) in line 829 from previous stage n - 2 (not shown). The combined gas in line 831 enters the inlet port of generic stage n - 1, i.e., separation device 803. Booster pump 825 is optional and provides a boost in pressure when needed to transfer gas from stage n to stage n - 1. Booster pump 825 may utilize a turbomolecular pump assembly similar to that used in separation devices 801, 803, 805, 807, and 809.

The gas flowing through separation device 803, i.e., generic stage n - 1, is separated as described above to provide an interstage heavy gas fraction via line 817 and a first gas product or interstage light gas fraction further enriched in the lighter components that flows from separation device 803 via line 833 and passes through an optional booster pump (not shown). This light gas fraction is combined with a second gas product enriched in the heavier components from generic stage n - 3 (not shown), and the combined gas flows to the inlet port of generic stage n - 2 (not shown).

The operation continues in the same manner through successive stages as required, wherein successive gas streams are enriched in the lighter components and depleted in the heavier components, and ends at generic stage 1 or separation device 801. The first gas fraction further enriched in the lighter components is withdrawn from stage 2 (not shown) via optional turbomolecular booster pump 835, passes through line 837, optional filter 837a, and flow restricting orifice 837b, is combined with a reduced-pressure portion in line 839 of the light gas product, and the combined gas flows to the inlet port of generic stage 1 or separation device 801. The gas flowing through separation device 801 is separated as described above to provide a light gas product from generic stage 1 via line 811. This gas is withdrawn through optional turbomolecular booster pump 841 and through forepump 843 to provide a light gas product in line 845, typically at or near atmospheric pressure. This light gas product is divided into a final light gas product discharged through line 847 and a light gas portion, which portion flows via line 849, optional filter 849a, and flow restricting orifice 849b to provide the reduced-pressure light gas in line 839 feeding separation device 801 as described above. An interstage heavy gas fraction is withdrawn from separation device 801 via line 851, passes through optional filter 851 a and flow restricting orifice 851 b, and flows via line 852 to the inlet port of generic stage 2 (not shown).

A heavy gas fraction from separation device 805, i.e., generic stage n, is discharged via line 853, optional filter 853a, and flow restricting orifice 853b, is combined with a light gas fraction via line 855 from generic stage n + 2 (not shown), and the combined gas stream in line 857 is introduced into the feed port of separation device 807, i.e., generic stage n + 1. The gas flowing through separation device 807, i.e., generic stage n + 1, is separated as described above to provide an interstage heavy gas fraction via line 859 and an interstage light gas fraction via line 861. This light gas fraction passes through optional turbomolecular booster pump 863 to provide the light gas fraction via line 819 described above. The interstage heavy gas fraction via line 859 flows through optional filter 859a and flow restricting orifice 859b to the inlet port of generic stage n + 2 (not shown). A light gas fraction from generic stage n + 2 (not shown) passes through optional turbomolecular booster pump 865 to provide the light gas fraction via line 867, optional filter 867a, and flow restricting orifice 867b to provide the light gas fraction in line 855 described above.

The operation continues in the same manner through successive stages as required, wherein successive gas streams are in the depleted lighter components and enriched in the heavier components, and ends at generic stage N or separation device 809. A heavy gas fraction enriched in the heavier components is withdrawn from stage N - 1 (not shown) via line 869 and is introduced into the feed port of generic stage N. The gas flowing through separation device 809 is separated as described above to provide a light gas product or interstage light fraction via line 871 that flows to a turbomolecular booster pump (not shown) and to stage N - 1 (not shown). A final heavy gas product is withdrawn via line 813 by forepump 814.

Any separation stage in the multi-stage system described above may include a forepump (not shown) in flow communication with the heavy product outlet or interstage heavy fraction outlet, depending upon the desired outlet pressure of the stage.

Any commercially-available turbomolecular pump may be used for booster pumps in the embodiments described above and may be modified for use in separation devices as described above. Representative turbomolecular pump suppliers include, for example, Alcatel (Adixen), Pfeiffer, Helix Technology, and Kurt J. Lesker Company .

Any of the turbomolecular booster pumps in the embodiments described above may use a forepump having an inlet (suction) end in flow communication with the turbomolecular pump outlet. The forepump serves to provide initial evacuation of the vacuum system and then continuous removal of gases from the outlet of the operating turbomolecular pump. Examples of such forepumps include rotary vane pumps and diaphragm pumps. Any commercially-available forepump may be used in the above embodiments, and a representative forepump supplier is Varian, Inc.

The example staged system of Fig. 8 is shown in a vertical configuration for the purpose of illustration, but the stages can be in arranged any desired configuration. For example, the multiple stages could be arranged along parallel and/or orthogonal axes in horizontal and/or vertical planes to minimize required floor space in a production facility. In another alternative, a circular arrangement could be used in a single plane or in multiple parallel planes. Any of the flow restricting orifices described above may be replaced by adjustable throttling valves if desired.

In the example described above with reference to Fig. 8, the feed gas is introduced at an intermediate stage located between a multiple-stage light product enrichment section and a multiple-stage heavy product enrichment section. In alternative embodiments, the feed gas may be introduced into any generic stage having a reference number from 1 to N, inclusive. The selection of the feed stage is determined by product purity and recovery requirements. In one embodiment, for example, the desired product is the lightest component in a multicomponent mixture and is required at high purity and recovery, and there is no need to recover the heavy components. In this case, the feed stage would be generic stage N and the feed gas would be combined with the interstage gas in line 869 of Fig. 8. In another embodiment, the desired product is the heaviest component in a multicomponent mixture and is required at high purity and recovery, and there is no need to recover the light components. In this case, the feed stage would be generic stage 1 and the feed gas would be combined with the interstage gas in line 852 of Fig. 8. In other embodiments, multiple feed stages can be envisioned in which multiple feed gas streams have different concentrations of the desired product component and are introduced at the appropriate stages of the system.

The interstage flow of gas in the example of Fig. 8 is effected by pressure differences between stages. Pressure differences will occur inherently in each stage because each turbomolecular pump assembly in a given stage operates to increase the gas pressure from the inlet end to the outlet end of the stage. Because pressure is increased by the turbomolecular pump assemblies in the direction of heavier component enrichment, the pressure differences required to drive interstage heavy gas fractions from stage to stage may be inherently sufficient. The available pressure differences to drive the interstage light gas fractions from stage to stage, however, will depend on the system design and on the operating characteristics of the turbomolecular pump assemblies, the most important of which are the pump compression ratio for the components in the feed gas mixture and the maximum possible pump outlet pressure. If the compression ratios and pump outlet pressures are sufficiently high, interstage booster pumps to move the light gas fractions from stage to stage may not be required. If the compression ratios are insufficient, however, booster pumps may be required between each stage as shown in the example of Fig. 8. In other cases, booster pumps may be required only between some of the stages.

Different operating embodiments therefore can be envisioned depending on the system design and the turbomolecular pump assembly operating characteristics. In a first embodiment, all stages would operate at the same first chamber (i.e., inlet end) pressure and at the same second chamber (i.e., outlet end) pressure, and a pressure booster would be used on each light gas interstage stream. In a second embodiment, the pressure in the first chamber (i.e., inlet end) of each stage would decrease monotonically in the direction of light component enrichment (e.g., from stage N to stage 1 in Fig. 8), and no pressure boosters would be required. In a third embodiment, pressure boosters would be used, but not at every stage. The first chamber pressures in a first group of successive stages would be sufficient to effect the interstage flow of the light gas fractions, a pressure booster would be installed at the light gas outlet of the first group of stages, the pressure booster would discharge into a second number of successive stages having a sufficient pressure gradient to effect the interstage flow of the light gas fractions, and so forth as required.

Typical stage operating pressures for the embodiments described above will vary depending on the pump characteristics and the mixture being separated. Typical stage inlet pressures may be in the range of $10^{-5}$ torr ($1.3 \times 10^{-3}$ Pa) to $10^{-10}$ torr ($1.3 \times 10^{-8}$ Pa) and typical stage outlet pressures may be in the range of 10 torr ($1.3 \times 10^{2}$ Pa) to $10^{-2}$ torr (1.3 Pa).

The operating temperatures in the separation devices described above are in the typical range of 0 °C to 30 °C, or typically near 20 °C.

EXAMPLE 1

An $O_2/N_2$ mixture in the molar ratio of 0.21/0.79 is enriched to a product gas containing 99.0 mol % $O_2$ and 1.0 mol % $N_2$ using a separation device as described above. The stage separation factor is estimated from Eqn. 4 as

$$q_o \sim (32/28)^{4.83} = 1.91.$$

This represents an extremely high stage separation factor for air separation compared to other methods. The total number of stages, S, needed to complete the enrichment is found from Eqn. 6 as

$$S+1 \sim \ln[(0.99/0.01)/(0.21/0.79)]/\ln(1.91) = 9.15$$

$$S \sim 8.15 \sim 9.$$

Thus only 9 turbomolecular pump stages are needed to perform the required $O_2$ enrichment to 99%.

EXAMPLE 2

A $^{28}SiF_4/^{29}SiF_4/^{30}SiF_4$ mixture in the molar ratio 0.9223/0.0467/0.0310 is enriched to 99.0 mol % $^{28}SiF_4$ and 1.0 mol % $^{29}SiF_4/^{30}SiF_4$ using a separation device as described above. $^{29}SiF_4$ has a molecular weight of 105 and $^{30}SiF_4$ has a molecular weight of 106.
However, a mixture of $^{29}SiF_4/^{30}SiF_4$ is conservatively assumed to have a mean molecular weight of 105. The stage separation factor from Eqn. 4 is

$$q_o \sim (105/104)^{4.83} = 1.0473.$$

This represents an extremely high stage separation factor for isotope separation. This result is based upon an extrapolation of the regression fit curve shown in Fig. 4 to higher molecular weight gases. The total number of separation stages, S, needed to complete the enrichment is found from Eqn. 6 as

$$S+1 \sim \ln[(0.99/0.01)/(0.922/0.078)]/\ln(1.0473) = 46.00$$

and S is equal to 45.
Thus only 45 turbomolecular pump stages are needed to perform the required $^{28}SiF_4$ enrichment to 99.0%.

EXAMPLE 3

The isotopic enrichment of $SiH_4$ is easier than $SiF_4$ due to the higher molecular weight ratio of the molecules and the accordingly higher stage separation factor. A $^{28}SiH_4/^{29}SiH_4$ / $^{30}SiH_4$ mixture having the molar ratio 0.9223/0.0467/0.0310 is enriched using a separation device as described above to 99.0 mol % $^{28}SiH_4$ and 1 mol % $^{29}SiH_4$. $^{29}SiH_4$ has a molecular weight of 33 and $^{30}SiH_4$ has a molecular weight of 34. However, a mixture of $^{29}SiH_4$ / $^{30}SiH_4$ is conservatively assumed to have a mean molecular weight of 33. The stage separation factor from Eqn. 4 is conservatively determined as

$$q_o \sim (33/32)^{4.83} = 1.16.$$

This represents an extremely high stage separation factor for isotope separation. The total number of stages, S, needed to complete the enrichment is found from Eqn. 6 as

$$S+1 \sim \ln[(0.99/0.01)/(0.922/0.078)]/\ln(1.16) = 14.33$$

$$S \sim 13.33 \sim 14.$$

Thus only 14 turbomolecular pump stages are needed to perform the required $^{28}SiH_4$ enrichment to 99.0%.

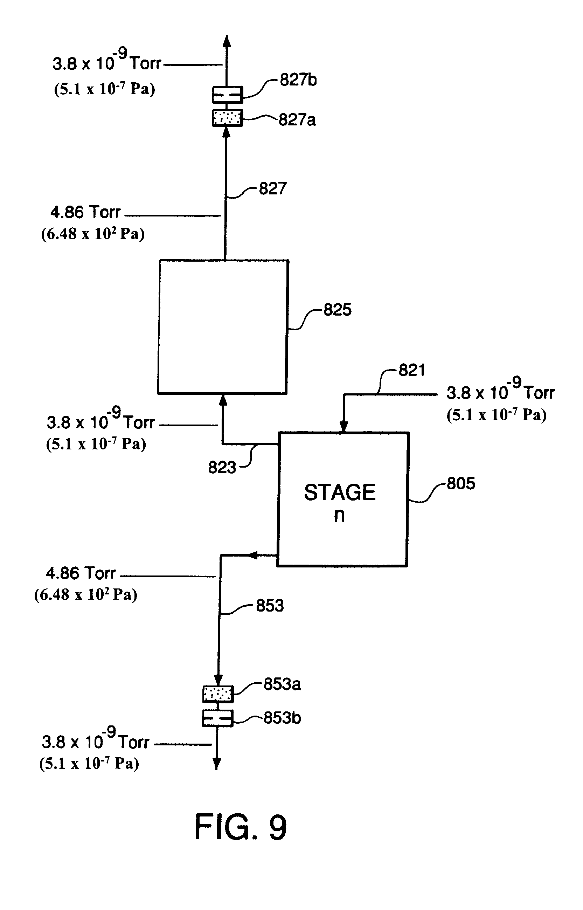

The separation device uses modified Alcatel (Adixen) model ATP 900 turbomolecular pumps for the separation stages, stock Alcatel (Adixen) model ATP 900 turbomolecular pumps for the booster pumps, and Pascal model 2005 for the forepumps. Adixen model ATP 900 pumps have an ultimate outlet pressure (under no load) of $3.8 \times 10^{-10}$ torr $(5.2 \times 10^{-8}$ Pa) and an approximate pumping speed of 900 liters per second at pressures below 0.1 torr (13 Pa) for $SiH_4$. Under $SiH_4$ inlet flow each of the pumps is operated at $3.8 \times 10^{-9}$ torr $(5.2 \times 10^{-7}$ Pa)in the first chamber (i.e., inlet end). The molecular weight of $^{28}SiH_4$ is within the range of the regression curve fit of Fig. 3. The compression ratio for $^{28}SiH_4$ from Eqn. 3 is calculated as $68.7(32)^{4.83} = 1.279 \times 10^9$. Therefore the second chamber (i.e., the outlet end) for each turbomolecular pump is $(3.8 \times 10^{-9})$ $(1.279 \times 10^9) = 4.86$ torr $(6.48 \times 10^2$ Pa). Each of the flow restricting orifices (or throttling valves) is set to provide the desired stream flow rate at these pressures. The pressures in and around a representative separation stage n of Fig. 8 are shown for this Example in Fig. 9.

**Claims**

1. A system for the separation of a gas mixture comprising:

   (a) a plurality of separation stages (801, 803, 805, 807, 809), each stage designated by a reference number n, where n is an integer having a value from 1 to N, inclusive, and N is the total number of stages, wherein each stage comprises

   (a1) a housing (403);
   (a2) a turbomolecular pump assembly (407) disposed within the housing and having an inlet end and an outlet end;
   (a3) a first chamber (409) within the housing adjacent the inlet end of the turbomolecular pump assembly and having and inlet port (413) and a first outlet port (415); and
   (a4) a second chamber (411) within the housing adjacent the outlet end of the turbomolecular pump assembly and having a second outlet port (417);

   (b) a passage (861, 819, 821) connecting the inlet port of a separation stage n with the first outlet port of an adjacent separation stage n + 1;
   (c) a passage (853, 857) connecting the second outlet port of the separation stage n with the inlet port of the separation stage n + 1;
   (d) a feed passage (815) in flow communication with the inlet port of any separation stage having a reference number n and defined as a feed stage, where the reference number n for the feed stage is an integer having a value from 1 to N, inclusive;
   (e) a first product withdrawal (811, 847) passage in flow communication with the first chamber of a separation stage having a reference number n = 1; and
   (f) a second product withdrawal passage (818) in flow communication with the second chamber of a separation stage having a reference number n = N.

2. A system of Claim 1 comprising

   (a5) a passage (817, 821) connecting the inlet port of the separation stage n with the second outlet port of an adjacent separation stage n - 1; and
   (a6) a passage (823, 827, 831) connecting the first outlet port of the separation stage n with the inlet port of the adjacent separation stage n - 1.

3. A system of Claim 1 or Claim 2 wherein the feed stage has the reference number n = 2.

4. A system of Claim 1 or Claim 2 wherein the feed stage has the reference number n = N.

5. A system of Claim 1 or Claim 2 wherein the reference number n of the feed stage is greater than 2 and less than N.

6. A system of any one of Claims 1 to 5 comprising a booster pump (863) installed in the passage connecting the inlet port of the separation stage n with the first outlet port of the adjacent separation stage n + 1 to transfer gas from the adjacent separation stage n + 1 to stage n.

**7.** A system of any one of Claims 1 to 6 comprising a flow control device (819b) installed in the passage connecting the inlet port of the separation stage n with the first outlet port of the adjacent separation stage n + 1.

**8.** A system of Claim 6 comprising a flow control device (819b) installed in the passage between the booster pump (863) and the inlet port of the separation stage n.

**9.** A system of Claim 7 or Claim 8 wherein the feed passage (815) is in flow communication with the passage between the inlet port of the feed stage and the outlet of the flow control device.

**10.** A system of any one of Claims 1 to 9 comprising a flow control device (853b) installed in the passage connecting the second outlet port of the separation stage n with the inlet port of the separation stage n + 1.

**11.** A system of any one of Claims 7 to 10 wherein flow control device is selected from a throttling valve and a flow restricting orifice.

**12.** A system of any one of Claims 1 to 11 comprising a product withdrawal pump (841) installed in the first product withdrawal passage to withdraw product gas from the chamber of the separation stage n = 1.

**13.** A system of any one of Claims 1 to 12 comprising a product withdrawal pump (814) installed in the second product withdrawal passage and adapted to withdraw product gas from the second chamber of the separation stage n = N.

**14.** A device for the separation of a gas mixture comprising

(a) a housing (403) having an axis (405);
(b) a turbomolecular pump assembly (407) disposed within the housing and having an inlet end and an outlet end;
(c) a first chamber (409) within the housing adjacent the inlet end of the turbomolecular pump assembly, the chamber having a feed gas inlet (413) to deliver feed gas to the inlet end of the turbomolecular pump assembly at or adjacent the axis thereof and a first outlet port (415) spaced apart from the feed gas inlet for the withdrawal of a first gas product; and
(d) a second chamber (411) within the housing adjacent the outlet end of the turbomolecular pump assembly and having a second outlet port (417) for the withdrawal of a second gas product therefrom.

**15.** A device of Claim 14 comprising a gas distribution baffle (501) disposed in the first chamber and lying in a plane orthogonal to the axis of the turbomolecular pump assembly, wherein one side of the baffle is adjacent a rotor (419) of the turbomolecular pump assembly at the inlet end thereof.

**16.** A device of Claim 15 wherein the feed gas inlet comprises a feed gas inlet tube (503) passing through the gas distribution baffle (501) at or adjacent the axis of the turbomolecular pump assembly.

**17.** A device of Claim 16 comprising a plurality of flow guide fins (701) attached to the gas distribution baffle on the side facing the turbomolecular pump assembly, wherein the flow guide fins extend radially outward from the intersection of the feed gas tube with the gas distribution baffle.

**18.** A method for the separation of a gas mixture containing at least a first component and a second component, wherein the second component has a higher molecular weight than the first component, comprising:

introducing the feed gas mixture into the feed passage of a system as defined in any one of Claims 1 to 13 and separating the gas in the plurality of separation stages;
withdrawing via the first product withdrawal passage a first product gas enriched in the first component; and
withdrawing via the second product withdrawal passage a second product gas enriched in the second component.

**19.** A method of Claim 18 wherein the feed gas mixture comprises $^{28}SiH_4$, $^{29}SiH_4$, and $^{30}SiH_4$.

**20.** A method of Claim 18 wherein the feed gas mixture comprises $^{28}SiF_4$, $^{29}SiF_4$, and $^{30}SiF_4$.

**21.** A method of Claim 18 wherein the feed gas comprises two or more components selected from oxygen, nitrogen, argon, krypton, and xenon.

**22.** A method of Claim 18 wherein the feed gas comprises two or more components selected from hydrogen, deuterium and tritium.

**23.** A method of Claim 18 wherein the feed gas comprises two or more components selected from helium, hydrogen, deuterium and tritium.

**24.** A method of any one of Claims 18 to 23 wherein the gas pressure in the first chamber of any separation stage is between $1.3 \times 10^{-3}$ Pa ($10^{-5}$ torr) and $1.3 \times 10^{-8}$ Pa ($10^{-10}$ torr).

**25.** A method of any one of Claims 18 to 24 wherein the gas pressure in the second chamber of any separation stage is between $1.3$ Pa ($10^{-2}$ torr) and $1.3 \times 10^{3}$ Pa ($10$ torr).

**26.** A method of any one of Claims 18 to 25 wherein the gas pressure in the first chamber of a separation stage having the reference number $n$ is less than the gas pressure in the first chamber of an adjacent separation stage having the reference number $n + 1$.

**27.** A method of Claim 26 wherein the gas pressure in the first chamber of a separation stage having reference number $n$ is less than the gas pressure in the first chamber of a separation stage having reference number $n + 1$ by the factor 2 to 10.

FIG. 1

FIG. 3

Log (MW)

Log (CR)

FIG. 2

Foreline (Pump Outlet) Pressure, Pa

Zero Flow Compression Ratio, CR

Ar

N₂

Hₑ

H₂

17

FIG. 4

FIG. 5

**FIG. 6**

**FIG. 7**

EP 1 840 383 A1

FIG. 8

$3.8 \times 10^{-9}$ Torr
$(5.1 \times 10^{-7} \text{ Pa})$

827b

827a

827

4.86 Torr
$(6.48 \times 10^{2} \text{ Pa})$

825

821

$3.8 \times 10^{-9}$ Torr
$(5.1 \times 10^{-7} \text{ Pa})$

823

$3.8 \times 10^{-9}$ Torr
$(5.1 \times 10^{-7} \text{ Pa})$

STAGE
n

805

4.86 Torr
$(6.48 \times 10^{2} \text{ Pa})$

853

853a

853b

$3.8 \times 10^{-9}$ Torr
$(5.1 \times 10^{-7} \text{ Pa})$

FIG. 9

**European Patent Office**

**EUROPEAN SEARCH REPORT**

Application Number

EP 07 25 1419

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 603 694 A (BALZERS PFEIFFER GMBH [DE]) 29 June 1994 (1994-06-29)<br>* abstract *<br>* page 1 *<br>* sentences 32-39; figure 5 *<br>* sentences 47-51; figure 5 *<br>----- | 14,18 | INV.<br>F04D19/04<br>B01D53/00 |
| A | US 3 973 929 A (KRAUS THADDAUS) 10 August 1976 (1976-08-10)<br>* the whole document *<br>----- | 1,14,18 | |
| A | US 3 546 891 A (FEKETE LANCELOT A) 15 December 1970 (1970-12-15)<br>* the whole document *<br>----- | 1,14,18 | |
| A | US 5 049 168 A (DANIELSON PHILIP [US]) 17 September 1991 (1991-09-17)<br>* the whole document *<br>----- | 1,14,18 | |

TECHNICAL FIELDS SEARCHED (IPC)

F04D
B01D
F04B
F24J

The present search report has been drawn up for all claims

| Place of search | Date of completion of the search | Examiner |
|---|---|---|
| Munich | 11 July 2007 | Giorgini, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**                    EP 07 25 1419

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2007

| Patent document cited in search report | | Publication date | Patent family member(s) | | Publication date |
|---|---|---|---|---|---|
| EP 0603694 | A | 29-06-1994 | JP | 6280785 A | 04-10-1994 |
| US 3973929 | A | 10-08-1976 | CH | 567878 A5 | 15-10-1975 |
| | | | DE | 2341005 A1 | 30-01-1975 |
| | | | FR | 2236545 A1 | 07-02-1975 |
| | | | GB | 1468915 A | 30-03-1977 |
| | | | NL | 7314006 A | 14-01-1975 |
| US 3546891 | A | 15-12-1970 | NONE | | |
| US 5049168 | A | 17-09-1991 | NONE | | |

EPO FORM P0459

For more details about this annex : see Official Journal of the European Patent Office, No. 12/82

## REFERENCES CITED IN THE DESCRIPTION

**Non-patent literature cited in the description**

- A User's Guide to Vacuum Technology. John Wiley and Sons, 2003